Europäisches Patentamt

European Patent Office

Office européen des brevets

(11) Numéro de publication: **0 412 866 A1**

## DEMANDE DE BREVET EUROPEEN

(21) Numéro de dépôt: **90402020.3**

(22) Date de dépôt: **12.07.90**

(51) Int. Cl.5: **G21C 1/09**

La demande, qui etait incomplète au moment du dépot, est publiée telle quelle (article 93 (2) CBE). Le passage de la description ou des revendications qui comporte manifestement une omission est présenté comme tel.

Revendications modifiées conformément à la règle 86 (2) CBE.

(30) Priorité: **20.07.89 FR 8909802**

(43) Date de publication de la demande:
**13.02.91 Bulletin 91/07**

(84) Etats contractants désignés:
**BE DE**

(71) Demandeur: **FRAMATOME**
**Tour Fiat 1, Place de la Coupole**
**F-92400 Courbevoie(FR)**

(72) Inventeur: **Godin, Bruno**
**21, rue Pasteur**
**F-69680 Chassieu(FR)**
Inventeur: **Guicherd, Laurent**
**105, rue du 4 août**
**F-69100 Villeurbanne(FR)**

(74) Mandataire: **Bouget, Lucien et al**
**Cabinet Lavoix 2, Place d'Estienne d'Orves**
**F-75441 Paris Cédex 09(FR)**

(54) **Pressuriseur d'un réacteur nucléaire à eau sous pression comportant des manchettes de traversée de cannes chauffantes obturables et procédé d'obturation correspondant.**

(57) Chacune des manchettes de traversée (11a) est prolongée à l'une de ses extrémités située à l'extérieur de l'enveloppe du pressuriseur par un manchon (18) taraudé intérieurement qui est lui-même prolongé à son extrémité située à l'opposé de la manchette de traversée (11a), par un manchon (20) de guidage et de fixation étanche par soudage de la canne chauffante. La manchette de traversée (11a) peut être obturée par un bouchon fileté introduit dans la partie taraudée (18a) du manchon (18) après découpage du manchon de soudage (20) et extraction de la canne chauffante (10a).

FIG.3A

L'invention concerne un pressuriseur d'un réacteur nucléaire à eau sous pression comportant des manchettes de traversée de cannes chauffantes qui peuvent être facilement et rapidement obturées après un démontage des cannes chauffantes correspondantes.

Les réacteurs nucléaires à eau sous pression comportent un circuit primaire dans lequel l'eau de refroidissement du réacteur est maintenue à une forte pression, de l'ordre de 155 bars, grâce à un pressuriseur disposé sur l'une des branches du circuit primaire.

Le pressuriseur permet de maintenir la pression dans le circuit primaire entre certaines limites déterminées, soit par aspersion lorsque la pression a tendance à dépasser la limite supérieure admise, soit par chauffage électrique du fluide primaire, lorsque la pression a tendance à descendre en-dessous de la valeur supérieure admise. Ces opérations sont effectuées à l'intérieur du pressuriseur qui comporte en particulier une enveloppe ayant un fond bombé par lequel on introduit les cannes de chauffage électrique à l'intérieur du pressuriseur.

Des manchettes de traversées sont fixées par soudage sur le fond du pressuriseur, chacune au niveau d'une ouverture de traversée. Les cannes chauffantes sont introduites dans les manchettes et soudées à leur extrémité, de manière à assurer la tenue mécanique et l'étanchéité de la liaison.

Les cannes chauffantes sont réalisées sous la forme de doigts de gant renfermant les résistances de chauffage et comportant une extrémité ouverte au niveau de l'extrémité extérieure de la manchette de traversée pour assurer le branchement et l'alimentation des résistances électriques.

Au moment de son installation sur le circuit primaire d'un réacteur nucléaire à eau sous pression, le pressuriseur comporte un nombre de cannes chauffantes plus important que le nombre de cannes nécessaire pour assurer dans tous les cas la fourniture d'une puissance de chauffage suffisante.

Lors de la mise en service du pressuriseur, on réalise uniquement le branchement d'un nombre de cannes permettant de fournir la puissance de chauffage nécessaire au pressuriseur. Les cannes chauffantes non utilisées constituent une réserve qui est facilement utilisable, lorsqu'une ou plusieurs cannes chauffantes sont devenues défectueuses pendant leur utilisation dans le pressuriseur en service et ne remplissent plus correctement leur rôle qui consiste à chauffer le fluide primaire pour produire de la vapeur et pressuriser le circuit primaire.

Lorsque le nombre de cannes chauffantes en état de marche disponibles sur le pressuriseur devient insuffisant pour assurer dans tous les cas la fourniture de la puissance de chauffage nécessaire et la pressurisation du circuit primaire, le réacteur nucléaire doit être arrêté et on procède à la mise en service de cannes chauffantes de remplacement. Ces cannes chauffantes de remplacement peuvent être constituées par les cannes maintenues en réserve ou par de nouvelles cannes introduites et fixées dans le pressuriseur à la place des cannes chauffantes défectueuses.

Les cannes chauffantes sont introduites dans lenveloppe du pressuriseur à l'intérieur de laquelle elles réalisent le chauffage de l'eau primaire, à travers un fond bombé de fermeture de l'enveloppe constituant le fond inférieur du pressuriseur.

Les cannes chauffantes traversent le fond bombé à l'intérieur de manchettes de traversée fixées de manière étanche sur le fond bombé par soudure sur la surface intérieure et sur la surface extérieure du fond bombé.

La canne chauffante est fixée de manière étanche sur la manchette de traversée, par une soudure circulaire effectuée à l'extrémité de la manchette située à l'extérieur du pressuriseur. Cette extrémité de la manchette comporte généralement un embout qui peut être découpé pour effectuer le démontage de la canne chauffante défectueuse, puis réusiné avant qu'on réalise le montage et la fixation par soudure de la canne chauffante de remplacement.

Ces opérations de remplacement des cannes chauffantes doivent être réalisées le plus rapidement possible, d'une part pour éviter de maintenir le personnel chargé de ces opérations dans une zone voisine du fond du pressuriseur qui est fortement irradiée, pendant une durée importante et d'autre part, pour réduire le temps d'arrêt du réacteur et maintenir sa rentabilité à un niveau satisfaisant.

Dans certains cas, il peut être avantageux et plus rapide de réaliser l'obturation étanche de la manchette de traversée plutôt que le remplacement de la canne chauffante, dans la mesure où le nombre résiduel de cannes chauffantes disponibles est suffisant.

En outre, dans le cas où une manchette de traversée a dû subir plusieurs découpages et plusieurs réusinages successifs pour le remplacement dune canne chauffante, la longueur résiduelle disponible de cette manchette de traversée peut devenir insuffisante. Il est alors nécessaire de recourir à un procédé d'obturation étanche de la manchette.

Dans ce cas, il est nécessaire de souder à l'extrémité de la manchette, un manchon fileté dans lequel on visse un bouchon de fermeture qui est fixé de manière étanche sur le manchon fileté par un cordon de soudure circulaire.

Ces opérations nécessitent l'utilisation de machines adaptées pour préparer l'extrémité de la manchette, usiner des chanfreins de soudage et pour effectuer le soudage du manchon fileté et du bouchon.

Le but de l'invention est donc de proposer un pressuriseur d'un réacteur nucléaire à eau fous. pression comportant une enveloppe fermée à l'une de ses extrémités par un fond bombé et une pluralité de cannes chauffantes traversant le fond bombé du pressuriseur à l'intérieur de manchettes de traversée soudées sur le fond du pressuriseur, ce pressuriseur permettant de réaliser de manière simple et rapide le démontage de cannes chauffantes défectueuses et l'obturation étanche des manchettes de traversée correspondantes.

Dans ce but, chacune des manchettes de traversée est prolongée à l'une de ses extrémités située à l'extérieur de l'enveloppe du pressuriseur par un manchon fileté intérieurement qui est lui-même prolongé à son extrémité située à l'opposé de la manchette de traversée par un manchon de passage et de fixation étanche par soudage à la canne chauffante.

Afin de bien faire comprendre l'invention, on va maintenant décrire, à titre d'exemple non limitatif, en se référant aux figures jointes en annexe, un pressuriseur suivant l'invention et une opération de démontage d'une canne chauffante défectueuse et d'obturation étanche de la manchette de traversée correspondante.

La figure 1 est une vue d'ensemble en perspective d'un pressuriseur d'un réacteur nucléaire à eau sous pression.

La figure 2 est une vue schématique en élévation et en coupe partielle de la partie inférieure du pressuriseur représenté sur la figure 1.

La figure 3 est une demi-vue en coupe par un plan vertical de symétrie de la partie inférieure d'un pressuriseur suivant l'invention.

La figure 3A est une vue à plus grande échelle du détail A de la figure 3.

La figure 3B est une vue à plus grande échelle du détail B de la figure 3.

La figure 4 est une vue à grande échelle du détail 4 de la figure 3B.

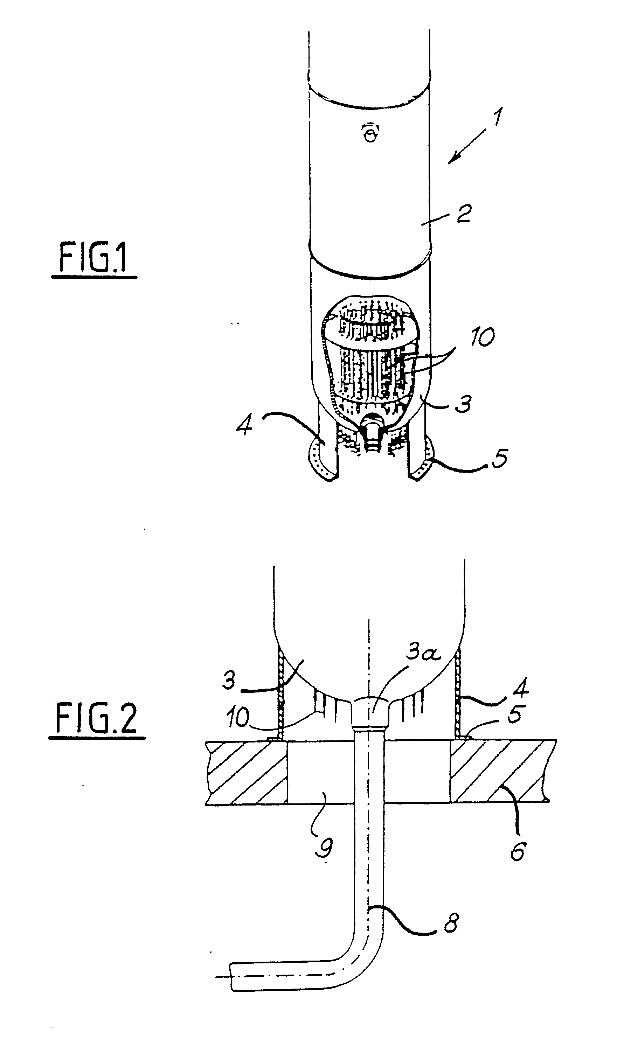

Sur la figure 1, on voit un pressuriseur d'un réacteur nucléaire à eau sous pression désigné de manière générale par le repère 1. L'enveloppe 2 de ce pressuriseur de forme cylindrique est disposée avec son axe vertical, lorsque le pressuriseur est dans sa position de service sur le circuit primaire d'un réacteur nucléaire à eau sous pression. L'enveloppe 2 est fermée à sa partie inférieure par un fond bombé 3 sur lequel est fixé, de manière coaxiale par rapport à l'enveloppe 2, une jupe 4 constituant une bride de fixation 5 à son extrémité opposée au fond 3, comme il est visible sur les figures 1 et 2.

La bride 5 constituant la partie inférieure de support de l'enveloppe 2 vient reposer, lors du montage du pressuriseur dans le réacteur nucléaire, sur une dalle 6 en béton de forte épaisseur.

Le fond bombé 3 comporte à sa partie inférieure une tubulure 3a sur laquelle vient se raccorder une canalisation 8 de forte section constituant la ligne d'expansion du pressuriseur qui est raccordée, à son extrémité opposée à la tubulure 3a, à une canalisation du circuit primaire.

La ligne d'expansion 8 traverse la dalle 6 par une ouverture 9 dont le diamètre est inférieur au diamètre intérieur de la jupe 4 et de la bride d'appui 5. La ligne d'expansion 8 met en communication l'intérieur de l'enveloppe du pressuriseur avec le circuit primaire du réacteur, pour assurer le maintien en pression de ce circuit primaire.

Des cannes chauffantes 10 constituées par des doigts de gant dans lesquels sont placés des éléments de chauffage électriques pénètrent dans l'enveloppe 2 du pressuriseur, à travers le fond bombé 3 et sont disposées sur une certaine hauteur, à l'intérieur de l'enveloppe 2, dans la direction verticale c'est-à-dire parallèlement à l'axe de l'enveloppe 2.

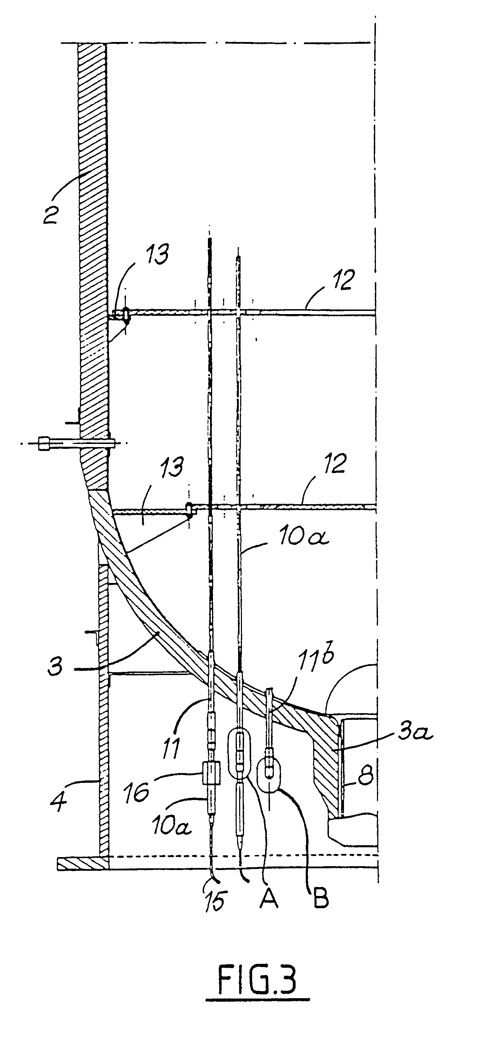

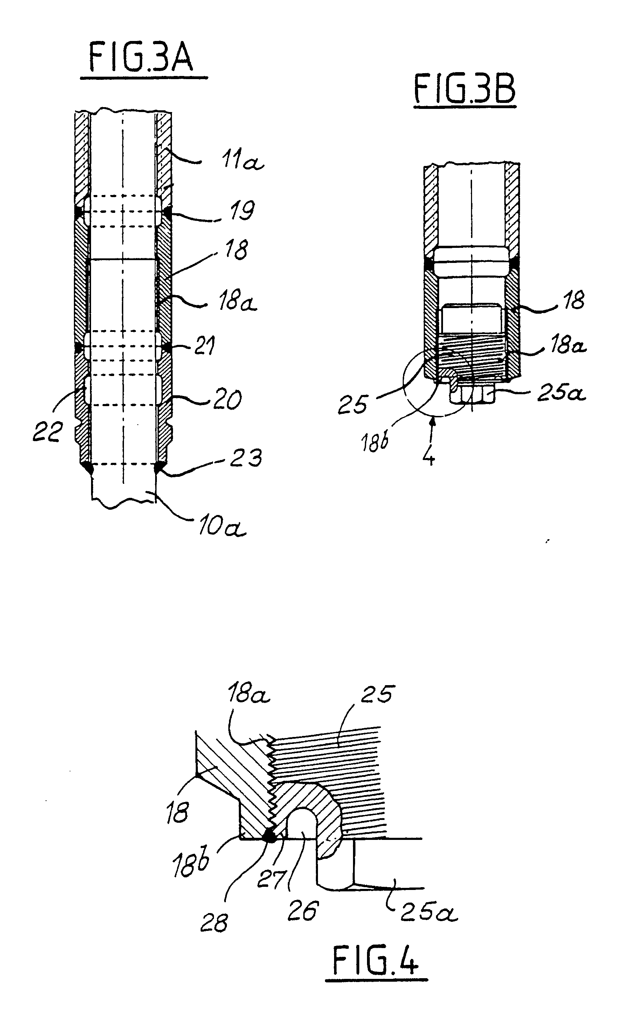

Comme il est visible sur la figure 3, les cannes chauffantes 10 traversent le fond bombé 3 à l'intérieur de manchettes de traversée 11 qui sont fixées dans des ouvertures de direction axiale usinées sur toute l'épaisseur de la paroi du fond hémisphérique 3. Les manchettes 11 sont soudées sur le fond bombé 3, au niveau de sa surface intérieure concave et au niveau de sa surface extérieure convexe.

Les cannes chauffantes 10 sont maintenues dans une disposition verticale à l'intérieur de l'enveloppe 2, grâce à des plaques supports horizontales 12 elles-mêmes fixées sur des équerres 13 soudées sur la paroi intérieure de l'enveloppe du pressuriseur.

La partie inférieure de la canne chauffante 10 située à l'extérieur de la manchette de traversée correspondante 11 est reliée à un câble électrique 15 permettant son alimentation en courant de chauffage.

La partie d'extrémité extérieure de la canne chauffante 10 porte également un radiateur 16 utilisé pour évacuer la chaleur résiduelle fournie par la canne 10 lorsqu'elle est en service.

Les cannes chauffantes 10 sont fixées par soudage à l'extrémité des manchettes de traversée correspondantes 11.

Sur la figure 3, on a représenté une canne chauffante 10a en position de service dans le pressuriseur et traversant le fond 3 à l'intérieur d'une manchette de traversée 11 dont la partie inférieure est représentée en coupe sur la figure 3A.

On a également représenté une manchette de traversée 11b, après démontage de la canne chauffante correspondante, l'extrémité extérieure de la manchette 11b étant obturée par un bouchon de fermeture étanche.

La partie inférieure de la manchette 11b est représentée en coupe sur la figure 3B.

Sur la figure 3A, on voit la partie inférieure 11a de la manchette de traversée proprement dite de la canne chauffante 10a, cette manchette 11a étant fixée par soudure sur le fond 3 du pressuriseur.

Un manchon 18 comportant un taraudage intérieur 18a est fixé à l'extrémité de la manchette proprement dite 11a et dans son prolongement, par un joint de soudure circulaire 19. La manchette de traversée 11a et le manchon taraudé 18 sont raccordés bout à bout au niveau de parties d'extrémité à épaisseur réduite constituant deux rebords annulaires de jonction.

Un second manchon 20 est fixé à l'extrémité du manchon 18 opposée à son extrémité de raccordement à la manchette de traversée 11a et dans le prolongement du manchon 18 et de la manchette 11a.

Le manchon 20 est fixé bout à bout à l'extrémité du manchon taraudé 18, le manchon 18 et le manchon 20 d'épaisseur réduite à leurs extrémités mises en coïncidence constituant deux rebords suivant lesquels est réalisé le cordon de soudure annulaire 21 de jonction.

Le manchon 20 est usiné intérieurement pour constituer une gorge 22 au niveau de laquelle le manchon 20 présente une épaisseur réduite.

L'ensemble de la manchette de traversée et de ses prolongements constitués par les manchons 18 et 20 comporte trois zones à épaisseur réduite situées au niveau de la gorge 22 et des zones de jonction 21 et 19. Le découpage de la manchette peut être réalisé préférentiellement dans ses zones à épaisseur réduite.

Le diamètre intérieur courant de la manchette 11a et de ses prolongements 18 et 20 est légèrement supérieur au diamètre de la canne 10a qui peut être engagée dans la manchette par l'extrémité libre du manchon 20. Le manchon 20 constitue un élément de guidage de la canne pour son introduction dans le pressuriseur. De plus, lorsque la canne 10a a été mise en place, un cordon de soudure circulaire 23 est réalisé à l'extrémité du manchon 20, de manière à assurer la fixation de la canne 10a dans le pressuriseur et la jonction étanche entre la surface extérieure de cette canne chauffante 10a et l'extrémité du manchon 20.

La fixation de la canne 10a est donc réalisée de la même manière que dans le cas d'un dispositif selon l'art antérieur où la canne chauffante est soudée à l'extrémité de la manchette de traversée, généralement au niveau d'un embout comportant un chanfrein.

Le démontage de la canne chauffante peut être effectué par découpage de la paroi de la manchette 11a ou de ses prolongements 18 et 20, de préférence au niveau d'une partie à épaisseur réduite de cette paroi.

Après découpage de la paroi de la manchette, la canne chauffante peut être extraite, en exerçant. s'il est nécessaire une certaine traction sur son extrémité située à l'extérieur de l'enveloppe du pressuriseur.

Après extraction de la canne chauffante, une canne de remplacement peut être introduite dans la manchette et fixée par soudage à son extrémité. Préalablement à la fixation par soudage, l'extrémité de la manchette est réusinée et chanfreinée.

Dans certains cas, comme il a été expliqué plus haut, il n'est pas nécessaire de remplacer la canne chauffante et il peut être plus rapide de réaliser son obturation étanche par un bouchon.

Cette obturation de la manchette de traversée peut être nécessaire dans le cas où le découpage et le réusinage de l'extrémité de la manchette ne sont plus possibles.

Dans le cas d'un pressuriseur suivant l'invention comportant une manchette de traversée prolongée par un manchon taraudé et un manchon de guidage et de fixation de la canne chauffante, le montage d'un bouchon d'obturation étanche peut être réalisé de manière simple et rapide grâce à la présence du manchon taraudé intérieurement 18.

Le découpage de la manchette est effectué au niveau de l'extrémité inférieure du manchon taraudé 18 dans sa zone de jonction avec le manchon 20.

Comme il est visible sur les figures 3B et 4, l'extrémité du manchon 18 est réusinée pour constituer un chanfrein terminé vers l'intérieur par un rebord de jonction annulaire 18b.

Un bouchon 25 comportant une partie filetée sur sa surface extérieure est engagé par vissage dans l'alésage taraudé 18a du manchon 18, la partie filetée du bouchon 25 et la partie taraudée 18a du manchon 18 présentant des pas de vis similaires.

Le bouchon 25 comporte, dans le prolongement de sa partie filetée, une partie lisse à diamètre réduit engagée à l'intérieur du manchon lorsqu'on réalise le vissage du bouchon.

Le bouchon 25 comporte également une partie 25a constituant une tête de vis de forme prismatique à section hexagonale à l'opposé de sa partie lisse à diamètre réduit introduite dans le manchon 18. La tête de vis 25a permet de réaliser le vissage du bouchon à l'intérieur du manchon 18.

Le corps fileté du bouchon présente à la périphérie de la tête de vis 25a une gorge annulaire 26 délimitant un rebord 27 également de forme annulaire.

Le vissage du bouchon 25 dans le manchon 18 est effectué jusqu'au moment où le rebord annulaire 27 vient en coïncidence avec le rebord 18b du manchon 18, comme représenté sur la figure 4.

La fixation étanche du bouchon est réalisée grâce à un joint de soudure circulaire 28 assurant la jonction des parties en vis-à-vis des rebords 27 et 18b.

Le dispositif suivant l'invention permet donc de réaliser le bouchage étanche d'une manchette de traversée du pressuriseur sans avoir à effectuer le réusinage de la manchette de traversée proprement dite et sans avoir à fixer sur cette manchette un manchon tubulaire taraudé.

Le temps d'intervention des opérateurs au niveau du fond du pressuriseur est ainsi considérablement réduit, ce qui diminue les doses d'irradiation reçues par ces opérateurs. En outre, les manchettes ne sont accessibles que par le dessous et le travail des opérateurs doit se faire en plafond, c'est-à-dire dans des conditions difficiles pour lesquelles toute simplification des tâches est particulièrement souhaitable.

L'invention ne se limite pas au mode de réalisation qui a été décrit.

Dans ce mode de réalisation, le manchon taraudé et le manchon de guidage et de fixation de la canne chauffante sont fixés par soudage l'un à la suite de l'autre à l'extrémité de la manchette de traversée proprement dite. Il est également possible de prévoir des manchettes de traversée qui sont usinées intérieurement pour constituer un manchon taraudé et un manchon de guidage et de soudage de la canne chauffante situés l'un à la suite de l'autre et constituant une seule pièce avec la manchette de traversée proprement dite.

Cette solution peut être utilisée dans le cas de pressuriseurs de conception entièrement nouvelle dont les manchettes de traversée sont usinées et fixées en usine.

En revanche, dans le cas de pressuriseurs existants et utilisés dans un réacteur nucléaire à eau sous pression, il est possible de modifier ces pressuriseurs selon l'art antérieur pour qu'ils présentent les caractéristiques et les avantages des pressuriseurs suivant l'invention.

Dans ce cas, pendant un arrêt du réacteur, on démonte l'ensemble des cannes chauffantes du pressuriseur, on recoupe et on usine les manchettes de traversée et on fixe sur chacune de ces manchettes et dans leur prolongement, par soudure bout à bout, un manchon taraudé et un manchon de soudage de la canne chauffante, comme représenté sur la figure 3A.

Il est bien évident que le manchon taraudé ou le manchon de soudage pourront présenter des formes différentes de celles qui ont été décrites et représentées.

L'invention s'applique à tout pressuriseur d'un réacteur nucléaire à eau sous pression comportant des cannes chauffantes pénétrant dans l'enveloppe du pressuriseur, à l'intérieur de manchettes de traversée.

## Revendications

1.- Pressuriseur d'un réacteur nucléaire à eau sous pression comportant une enveloppe (2) fermée à l'une de ses extrémités par un fond bombé (3) et une pluralité de cannes chauffantes (10) traversant le fond bombé du pressuriseur à l'intérieur de manchettes de traversée (11) soudées sur le fond (3) du pressuriseur, caractérisé par le fait que chacune des manchettes de traversée (11) est prolongée à l'une de ses extrémités située à l'extérieur de l'enveloppe (2) du pressuriseur par un manchon (18) taraudé intérieurement qui est lui-même prolongé à son extrémité située à l'opposée de la manchette proprement dite (11a), par un manchon (20) de passage et de fixation étanche par soudage de la canne chauffante (10, 10a).

2.- Pressuriseur suivant la revendication 1, caractérisé par le fait que la manchette proprement dite (11a), le manchon taraudé (18) et le manchon de soudage (20) de la canne chauffante (10a) sont fixés l'un à la suite de l'autre dans la direction axiale, par soudage bout à bout.

3.- Pressuriseur suivant la revendication 1, caractérisé par le fait que le manchon taraudé intérieurement (18), le manchon de soudage (20) de la canne chauffante (10a) et la manchette de traversée proprement dite (11a) sont réalisés en une seule pièce.

4.- Procédé d'obturation d'une manchette de traversée d'un pressuriseur d'un réacteur nucléaire à eau sous pression comportant une enveloppe (2) fermée à l'une de ses extrémités par un fond bombé (3) et une pluralité de cannes chauffantes (10) traversant le fond bombé (3) du pressuriseur à l'intérieur de manchettes de traversée (11) soudées sur le fond (3) du pressuriseur, caractérisé par le fait que chacune

Revendications modifiées conformément à la règle 86(2) CBE.

1.- Pressuriseur d'un réacteur nucléaire à eau sous pression comportant une enveloppe (2) fermée à l'une de ses extrémités par un fond bombé (3) et une pluralité de cannes chauffantes (10) traversant le fond bombé du pressuriseur à l'intérieur de manchettes de traversée (11) soudées sur le fond (3) du pressuriseur, caractérisé par le fait que chacune des manchettes de traversée (11) est prolongée à l'une de ses extrémités située à l'extérieur de l'enveloppe (2) du pressuriseur par un manchon (18) taraudé intérieurement qui est lui-même prolongé à son extrémité située à l'opposée de la manchette proprement dite (11a), par un manchon (20) de passage et de fixation étanche par soudage de la canne chauffante (10, 10a).

2.- Pressuriseur suivant la revendication 1, caractérisé par le fait que la manchette proprement dite (11a), le manchon taraudé (18) et le manchon de soudage (20) de la canne chauffante (10a) sont fixés l'un à la suite de l'autre dans la direction axiale, par soudage bout à bout.

3.- Pressuriseur suivant la revendication 1, caractérisé par le fait que le manchon taraudé intérieurement (18), le manchon de soudage (20) de la canne chauffante (10a) et la manchette de traversée proprement dite (11a) sont réalisés en une seule pièce.

4.- Procédé d'obturation d'une manchette de traversée d'un pressuriseur d'un réacteur nucléaire à eau sous pression comportant une enveloppe (2) fermée à l'une de ses extrémités par un fond bombé (3) et une pluralité de cannes chauffantes (10) traversant le fond bombé (3) du pressuriseur à l'intérieur de manchettes de traversée (11) soudées sur le fond (3) du pressuriseur, caractérisé par le fait que chacune des manchettes de traversée (11a) proprement dite étant prolongée à l'une de ses extrémités située à l'extérieur de l'enveloppe (2) du pressuriseur par un manchon (18) taraudé intérieurement qui est lui-même prolongée à son extrémité situé à l'opposé de la manchette de traversée proprement dite (11a) par un manchon (20) de guidage et de fixation étanche par soudage de la canne chauffante (10a),

- on découpe la manchette (11) dans une zone située au voisinage de l'extrémité de jonction du manchon fileté (18) et du manchon de soudage (20),

- on extrait la canne chauffante du pressuriseur,

- on usine l'extrémité du manchon (18) pour constituer un rebord de jonction annulaire (18b) sur la partie intérieure de cette extrémité,

- on introduit et on fixe par vissage, à l'intérieur du manchon taraudé (18), un bouchon fileté (25) comportant un rebord de jonction (27) à sa partie périphérique, jusqu'à mettre en coïncidence le rebord (27) du bouchon (25) avec le rebord (18b) du manchon (18),

- et on réalise une fixation étanche du bouchon (25) dans le manchon (18) par un cordon de soudure annulaire (28) effectué dans la zone de jonction des rebords (18b) et (27).

FIG.1

1

2

10

4

3

5

FIG.2

3

3α

10

4

5

9

6

8

# FIG.3

## FIG.3A

## FIG.3B

## FIG.4

9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-120725 (EDF) <br> * page 6, ligne 21 - page 7, ligne 7 * <br> * page 7, ligne 29 - page 8, ligne 9; figures 1-2 * <br><br> --- | 1, 4 | G21C1/09 |
| A | GB-A-198535 (HAWTHORN) <br> * page 1, colonne de gauche, ligne 65 - page 1, colonne de droite, ligne 71 * <br> * page 1, colonne de droite, ligne 78 - page 2, colonne de gauche, ligne 24; figure * <br><br> --- | 1, 4 | |
| A | US-A-3114414 (JUDD) <br> * colonne 4, lignes 4 - 20; figures 2, 5 * <br><br> ----- | 1 | |

DOMAINES TECHNIQUES
RECHERCHES (Int. Cl.5 )

G21C
G21D
F28F

Le présent rapport a été établi pour toutes les revendications

| Lieu de la recherche | Date d'achèvement de la recherche | Examinateur |
|---|---|---|
| LA HAYE | 03 OCTOBRE 1990 | CAPOSTAGNO E. |

EPO FORM 1503 03.82 (P0402)